Europäisches Patentamt

European Patent Office

Office européen des brevets

(19)

(11) Veröffentlichungsnummer: **0 394 892**

**A2**

## (12) EUROPÄISCHE PATENTANMELDUNG

(21) Anmeldenummer: **90107613.3**

(22) Anmeldetag: **21.04.90**

(51) Int. Cl.⁵: **B60N 2/06**

(30) Priorität: **28.04.89 DE 3914046**

(43) Veröffentlichungstag der Anmeldung:
**31.10.90 Patentblatt 90/44**

(84) Benannte Vertragsstaaten:
**DE ES FR GB SE**

(71) Anmelder: **Brose Fahrzeugteile GmbH & Co.
KG**
**Postfach 1353 Ketschendorfer Strasse 38-50**
**D-8630 Coburg(DE)**

(72) Erfinder: **Dinkel, Emil**
**Lindenstrasse 84**
**D-7253 Renningen(DE)**
Erfinder: **Meschkat, Hans-Reinhard**
**Waldstrasse 10**
**D-8631 Ahorn(DE)**

(74) Vertreter: **Pretzell, Hellmut, Dipl.-Ing.**
**Brose Fahrzeugteile GmbH & Co.**
**Kommanditgesellschaft Patentabteilung**
**Postfach 1353, Ketschendorfer Strasse 38-50**
**D-8630 Coburg(DE)**

(54) **Längsführung, insbesondere für eine Längsverstelleinrichtung eines Fahrzeugsitzes.**

(57) Längsführung, insbesondere für eine Längsverstelleinrichtung eines Fahrzeugsitzes, mit einer Unterschiene und einer Oberschiene, wobei ein U-förmig ausgebildeter Führungsflansch der Oberschiene einen Stützsteg der Unterschiene umgreift und zwischen dem Führungsflansch und dem Stützsteg nach Art einer Dreipunktabstützung Gleitmittel angeordnet sind. Hierbei weisen zumindest der Führungsflansch oder der Stützsteg mit den Gleitmitteln in Kontakt stehende als axiale und radiale Führungsbahnen ausgebildete Führungsflächen auf.

FIG.3

Die Erfindung betrifft eine Längsführung, insbesondere für eine Längsverstelleinrichtung eines Fahrzeugsitzes, gemäß dem Oberbegriff des Anspruchs 1.

Längsverstelleinrichtungen zur längsverschiebbaren Verbindung eines Fahrzeugsitzes mit dem Fahrzeugboden weisen in der Regel zwei parallel zueinander angeordnete Längsführungen auf, die jeweils aus einer gegenüber einer Unterschiene längsverschiebbaren Oberschiene bestehen. Hierbei sind die Oberschienen der Längsführungen mit dem Fahrzeugsitz und die Unterschienen mit dem Fahrzeugboden verbunden.

Zur sicheren Führung des Fahrzeugsitzes auf den Längsführungen ist es erforderlich, einen möglichst spielfreien Eingriff zwischen den Oberschienen und Unterschienen zu erreichen. Gleichwohl sollen die Schienen möglichst leicht gegeneinander verschiebbar sein, um eine leichtgängige, komfortable Längsverstellung des Fahrzeugsitzes zu ermöglichen.

Aus der DE-OS 32 38 028 ist eine Längsführung bekannt, die aus einer eine Unterschiene umgreifenden Oberschiene besteht, wobei in den so geschaffenen Zwischenraum Wälzkörper nach Art einer Dreipunktabstützung eingesetzt sind. Hierbei ist durch den in die Oberschiene hineinragenden Bereich der Unterschiene eine Basis gebildet, die von einem Profilbereich der Oberschiene umgriffen wird. Die Basis unterteilt den Zwischenraum in zwei voneinander getrennte Kanäle, die je nach Art der Wälzkörper jeweils ein oder zwei Wälzkörper aufnehmen. Hierdurch wird die Basis der Unterschiene in drei Punkten gegenüber dem diese umgreifenden Profilbereich der Oberschiene abgestützt. Um ein einwandfreies Abwälzen der Wälzkörper während der Längsverstellung zu ermöglichen sind diese in Laufrillen und Profilrundungen geführt.

Die bei der bekannten Längsführung realisierte Dreipunktabstützung schafft zwar eine laufruhige und leichtgängige Längsführung, bei der Montage eines Fahrzeugsitzes auf zwei parallelen Längsführungen besteht jedoch die Gefahr, daß es durch die Verbindung des Fahrzeugsitzes mit den Oberschienen zu einer Verkantung zwischen Ober- und Unterschienen kommt. Die bekannte Längsführung erweist sich schon bei geringen Abweichungen von der korrekten Ausrichtung der Oberschienen zu den Unterschienen als besonders klemmanfällig.

Aufgrund der nahezu spielfreien Einbettung der Wälzkörper in die beiden Kanäle des Zwischenraums zwischen Ober- und Unterschiene ist zwar im Normalfall eine hochgenaue Führung ermöglicht; bei einer leichten Längsverdrehung einer Oberschiene gegenüber einer Unterschiene kommt es jedoch sofort zur Klemmung, so daß der beabsichtigte Vorteil der leichtgängigen, sicheren Sitzführung zunichte gemacht wird.

Der vorliegenden Erfindung liegt die Aufgabenstellung zugrunde, eine Längsführung der eingangs genannten Art da hingehend zu verbessern, daß die leichtgängigen, sicheren Führungseigenschaften der Längsführung auch bei einer relativen Verdrehung zwischen Oberschiene und Unterschiene erhalten bleibt.

Diese Aufgabe wird durch das kennzeichnende Merkmal des Anspruchs 1 gelöst.

Der Erfindung liegt der Gedanke zugrunde, durch eine entsprechende Ausbildung der Führungsflächen sowohl eine leichtgängige als auch präzise Führung in axialer und radialer Richtung zu ermöglichen. Erfindungsgemäß sind hierzu im Führungsflansch der Oberschiene oder im hiervon umgriffenen Stützsteg der Unterschiene die mit Gleitmitteln in Kontakt stehenden Führungsflächen so ausgebildet, daß sie sowohl axiale als auch radiale Führungsbahnen für die Gleitmittel darstellen.

Somit ist die Längsführung in der Lage, einer Verspannung aufgrund einer relativen Verdrehung zwischen Oberschiene und Unterschiene um die Längsachse der Längsführung entgegenzuwirken. Solange nicht die beide für eine Längsverstelleinrichtung benötigten Längsführungen sowohl mit dem Fahrzeugsitz als auch mit dem Fahrzeugboden verbunden sind, sind Ober- und Unterschiene der Längsführungen nach Art einer Schwenklagerung in ihrer Relativlage zueinander nicht definiert.

Hierdurch ist sichergestellt, daß sich aufgrund der Montage keine Verspannungen in den Längsführungen einstellen und so die leichtgängige und exakte Führung unabhängig von der Relativlage zwischen Oberschiene und Unterschiene gegeben ist.

Nach einer vorteilhaften Weiterbildung der Erfindung ist der U-förmige Führungsflansch aus drei Stegen, nämlich einer Basis und rechtwinkelig daran anschließenden Schenkeln, gebildet, wobei die Basis und beide Schenkel jeweils eine der auf einem gemeinsamen Umkreis äquidistant angeordneten und symmetrisch zur Mittelsenkrechten des Führungsflansches verteilten Führungsflächen aufweisen. Durch die gleichmäßige Verteilung der Führungsflächen auf einem gemeinsamen Umkreis und der symmetrischen Anordnung ist unabhängig von der relativen Verdrehung zwischen Oberschiene und Unterschiene eine sichere, die Führungseigenschaften der Längsführung nicht beeinflußende Aufnahme von vertikalen und horizontalen Belastungskräften ermöglicht.

Bei einem bevorzugten Ausführungsbeispiel der Erfindung sind die Gleitmittel als Kugeln ausgebildet, die in Laufrillen des als Wälzlagerführung ausgebildeten Stützsteges geführt sind und mit den Führungsflächen des Führungsflansches in Kontakt stehen, wobei die Krümmungsradien der Führungsflächen sich in einem gemeinsamen Punkt der Längsachse der Längsführung schneiden.

Die in den Laufrillen geführten Kugeln können wie bei einer Linearführung auf den durch die Führungsflächen gebildeten axialen Führungsbahnen abwälzen sowie bei einer relativen Verdrehung zwischen der Oberschiene und der Unterschiene auf den gleichfalls durch die Führungsflächen gebildeten radialen Führungsbahnen gleiten. Somit ist hier vorteilhaft die zum verspannungsfreien Betrieb der Längsführung erforderliche zweiachsige Bewegungsfreiheit gegeben.

Vorteilhafterweise weisen die Führungsflächen durch verringerte Krümmungsradien gebildete, seitliche Anlaufschultern auf. Hierdurch ist eine besonders zweckmäßige Montageerleichterung geschaffen. Durch die Schultern wird die mögliche relative Verdrehung von Oberschiene zu Unterschiene begrenzt, so daß ein völliges seitliches Wegklappen der Oberschiene oder Unterschiene, was die Handhabung der Längsführung bei der Montage unnötig erschweren würde, ausgeschlossen ist. Natürlich erfolgt die Begrenzung der Verdrehung erst bei einer Relativlage zwischen Oberschiene und Unterschiene, die aufgrund einer verspannten Montage nicht erreichbar ist. Die Verwendung der Längsführung zum Toleranzausgleich wird also dadurch nicht eingeschränkt.

Nach einem vorteilhaften Merkmal weist die der Führungsfläche der Basis zugeordnete Kugel einen gegenüber den anderen Kugeln vergrößerten Querschnitt auf. Dies berücksichtigt die in vertikaler Richtung verlaufende Hauptbelastung der Längsführung.

Vorteilhafterweise weisen die Laufrillen der Kugeln im Stützsteg horizontal verlaufende Konturbereiche auf. Hierdurch ist neben einer relativen Verdrehung zwischen Ober- und Unterschiene auch ein Querversatz der Schienen ermöglicht.

Nach einem weiteren bevorzugten Ausführungsbeispiel sind die Gleitmittel als Rollen ausgebildet, die in Längsnuten des als Wälzlagerführung ausgebildeten Führungsflansches geführt sind und mit den Führungsflächen des Stützsteges in Kontakt stehen, wobei sich die Krümmungsradien der Führungsflächen in einem gemeinsamen Punkt der Längsachse der Längsführung schneiden.

Aufgrund der Anordnung von Rollen als Gleitelemente hält dieses Ausführungsbeispiel auch höchsten Belastungen stand. Vorteilhafterweise wurden hierbei die Führungsflächen auf dem Stützsteg vorgesehen, um eine möglichst einfache Querschnittsgestaltung von Oberschiene und Unterschiene zu ermöglichen. Genau wie beim vorherigen Ausführungsbeispiel sind hier zwei Freiheitsgrade der Relativbewegung zwischen der Oberschiene und der Unterschiene verwirklicht. Zum einen können die in den Nuten des Führungsflansches sicher geführten Rollen in axialer Richtung auf den Führungsflächen abrollen, zum anderen ist auch ein Gleiten in Umfangsrichtung möglich.

Vorteilhafterweise besteht auch die Möglichkeit die Rollen als globoid- oder tonnenförmige Wälzkörper auszubilden, wobei dann die Längsnuten zur Führung der Wälzkörper einen entsprechenden konvexen oder konkaven Nutgrund aufweisen.

Nach einem weiteren bevorzugten Ausführungsbeispiel sind die Gleitmittel als Beschichtungen ausgebildet, die auf mit dem Stützsteg verbundenen Gleitleisten und/oder auf den Führungsflächen des Führungsflansches aufgebracht sind. Diese Ausführung stellt eine besonders kostengünstige Lösung bei vorzugsweise relativ geringen Belastungen dar.

Nach einem vorteilhaften Merkmal können auch mit dem Stützsteg oder dem Führungsflansch verbundene Gleitelemente als Gleitmittel vorgesehen werden, die vorzugsweise einen runden, rechteck-, globoid- oder tonnenförmigen Querschnitt aufweisen und sich im wesentlichen über die gesamte Länge der Längsführung erstrecken.

Gemäß einer vorteilhaften Weiterbildung weisen die Oberschiene und die Unterschiene einander versetzt überragende Verhakungsorgane auf. Hierdurch wird ein Aufreißen der Längsführung infolge ungewöhnlich hoher Belastungen, wie sie etwa im Crash-Fall auftreten, verhindert.

Vorzugsweise weist die Oberschiene dabei zumindest an beiden Schenkeln des Führungsflansches seitlich in den Innenraum des Profils weisende Hak-Vorsprünge auf, die von Hak-Vorsprüngen der Unterschiene überragt werden, die zu beiden Seiten des Stützsteges seitlich abstehen.

Die bevorzugten Ausführungsbeispiele werden anhand der nachstehenden Figuren näher dargestellt. Es zeigen:

Figur 1 eine Längsführung mit einer Oberschiene und einer Unterschiene und mit als Kugeln ausgebildeten Gleitmitteln;

Figur 2 eine Teilvergrößerung einer gegenüber der Längsführung in Fig. 1 modifizierten Längsführung;

Figur 3 ein weiteres Ausführungsbeispiel einer mit Kugeln versehenen Längsführung;

Figur 4 eine mit Rollen ausgestattete Längsführung;

Figur 5 eine Teildarstellung einer mit Globoidrollen versehenen Längsführung;

Figur 6 eine Teildarstellung einer mit tonnenförmigen Wälzkörpern versehenen Längsführung;

Figur 7 eine Längsführung mit einer eine Beschichtung aufweisenden Unterschiene;

Figur 8 ein Gleitelement mit rundem Querschnitt zum Einsatz in einer Längsführung;

Figur 9 ein Gleitelement mit rechteckigem Querschnitt;

Figur 10 ein Gleitelement mit Globoidquerschnitt und

Figur 11 ein Gleitelement mit Tonnenquerschnitt.

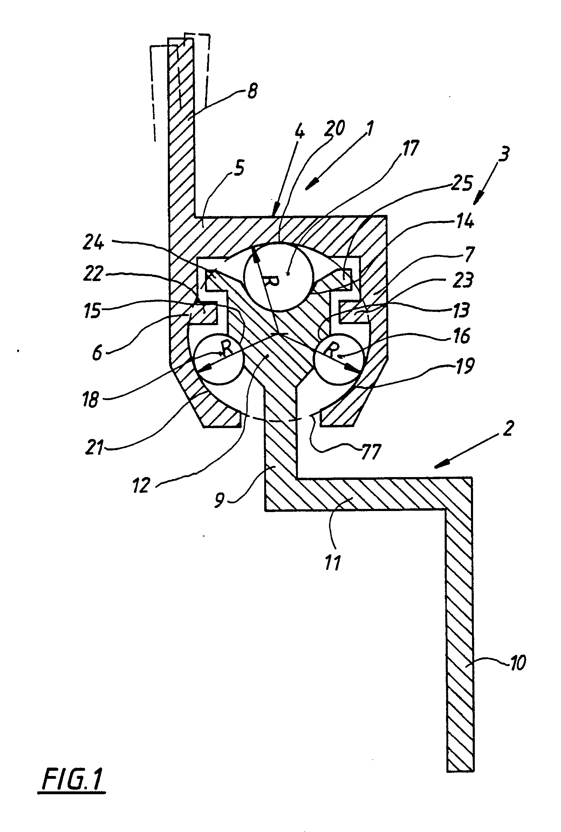

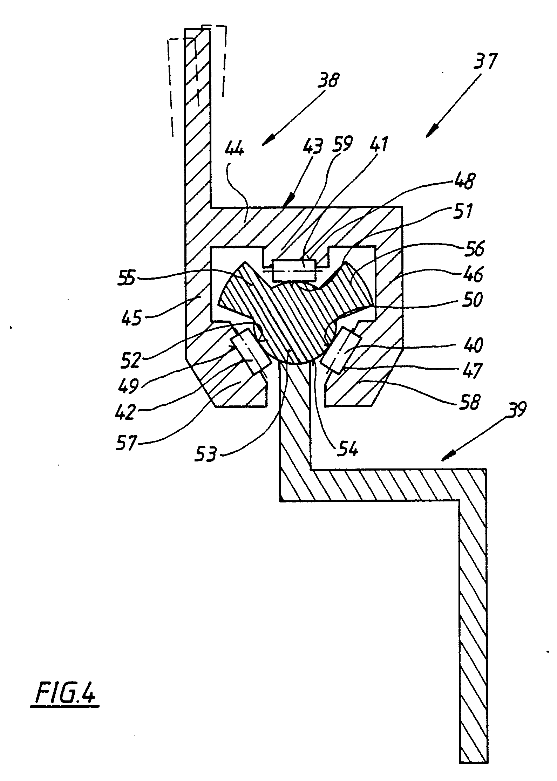

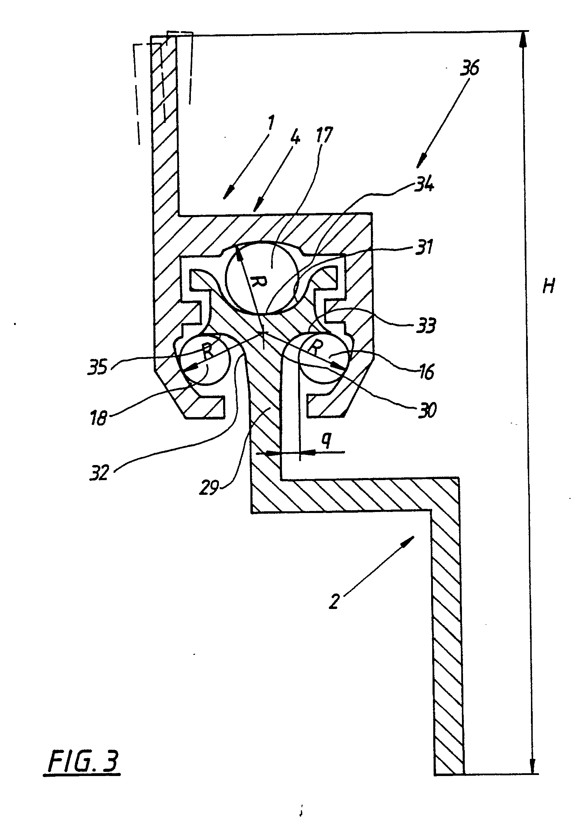

Figur 1 zeigt eine aus einer Oberschiene 1 und einer Unterschiene 2 zusammengesetzte Längsführung 3. Die Oberschiene 1 weist einen Führungsflansch 4 auf, der U-förmig ausgebildet ist und im wesentlichen aus einer Basis 5 mit rechtwinkelig von dieser abgehenden Schenkeln 6 und 7 besteht. Der Schenkel 6 weist einen über die Basis 5 hinausgehenden Bereich auf, durch den ein Verbindungsflansch 8 zur Verbindung der Oberschiene 1 mit einem hier nicht näher dargestellten Fahrzeugsitz gebildet ist.

Die Unterschiene 2 weist ein im wesentlichen Z-förmiges Profil auf, das aus einem senkrecht verlaufenden Stützsteg 9 und einem hierzu versetzten, ebenfalls senkrecht verlaufenden Verbindungsflansch 10 besteht, die über einen waagerechten Steg 11 miteinander verbunden sind. Der Verbindungsflansch 10 dient hierbei der Verbindung der Unterschiene 2 mit dem hier nicht dargestellten Fahrzeugboden.

Die Oberschiene 1 und die Unterschiene 2 der Längsführung 3 sind so zueinander angeordnet, daß der Führungsflansch 4 der Oberschiene 1 den Stützsteg 9 der Unterschiene 2 zu drei Seiten umgreift, wobei der Stützsteg 9 auf der der Basis 5 gegenüberliegenden Seite aus dem Führungsflansch 4 austritt. Der Stützsteg 9 ist an seinem freien, im Führungsflansch 4 gelegenen Endbereich als Wälzlagerführung 12 ausgebildet, die drei über den Umfang ihres Querschnitts regelmäßig verteilt angeordnete, in Längsrichtung des Stützsteges 9 verlaufende Laufrillen 13, 14 und 15 aufweist. In den Laufrillen 13, 14, 15 sind jeweils in Längsrichtung des Stützsteges 9 angeordnete Kugeln 16, 17, 18 geführt, die sich radial an jeweils den Laufrillen 13, 14, 15 gegenüber angeordneten Führungsflächen 19, 20, 21 des Führungsflansches 4 abstützen.

Die Führungsflächen 19, 20, 21 weisen gleiche Krümmungsradien R auf, die sich in einem gemeinsamen Punkt der Längsachse der Längsführung 3 schneiden. Daher sind die Führungsflächen 19, 20, 21 im Querschnitt der Längsführung 3 auf einem gemeinsamen Umkreis 77 um die Längsachse angeordnet.

Die Führungsflächen 19, 20, 21 bilden somit nicht nur axiale Führungsbahnen, auf denen bei einer Längsverschie bung der Oberschiene 1 gegenüber der Unterschiene 2 die in den Laufrillen 13, 14, 15 geführten Kugeln 16, 17, 18 abwälzen, sondern auch radiale Führungsbahnen, die ein Gleiten der Kugeln 16, 17, 18 längs der Führungsflächen 19, 20, 21 bei einer Relativdrehung zwischen Oberschiene 1 und Unterschiene 2 um die Längsachse der Längsführung 3 ermöglichen.

Bei dem in Figur 1 dargestellten Ausführungsbeispiel ist die obere der im Querschnitt der Längsführung 3 eine Dreipunktabstützung bildenden Kugeln 16, 17, 18 mit einem gegenüber den an den Schenkeln 6, 7 des Führungsflansches 4 anliegenden Kugeln 16, 18 vergrößerten Durchmesser ausgeführt. Hierdurch wird dem Umstand Rechnung getragen, daß im montierten Zustand der Längsführung 3 die Oberschiene 1 und die Unterschiene 2 eine relative Verdrehung zueinander aufweisen, die innerhalb des durch die gestrichelte Darstellung des Verbindungsflansches 8 angedeuteten Bereiches liegt, und somit der bei weitem größte Traganteil auf die in der oberen Laufrille 14 angeordneten Kugeln 17 entfällt. Zur Aufnahme der demgegenüber relativ geringen Seitenbelastungen sind die in den Laufrillen 14, 15 geführten kleiner dimensionierten Kugeln 16, 18 ausreichend.

Um ein Aufreißen der Längsführung 3 - infolge zwischen der Oberschiene 1 und der Unterschiene 2 wirkender, etwa durch eine Crash-Belastung verursachter Trennkräfte - zu verhindern, weisen die Oberschiene 1 und die Unterschiene 2 einander überragende Hak-Vorsprünge 22, 23 und 24, 25 auf. Die Hak-Vorsprünge 22, 23 der Oberschiene 1 sind als in den Innenraum des Führungsflansches 4 hineinragende, von den Schenkeln 6 und 7 abgehende Stege ausgebildet, die bei Erreichen einer bestimmten, die Oberschiene 1 von der Unterschiene 2 trennenden Relativbewegung mit den zu beiden Seiten des Stützsteges 9 abgehenden stegartigen Hak-Vorsprüngen 24, 25 zur Anlage kommen.

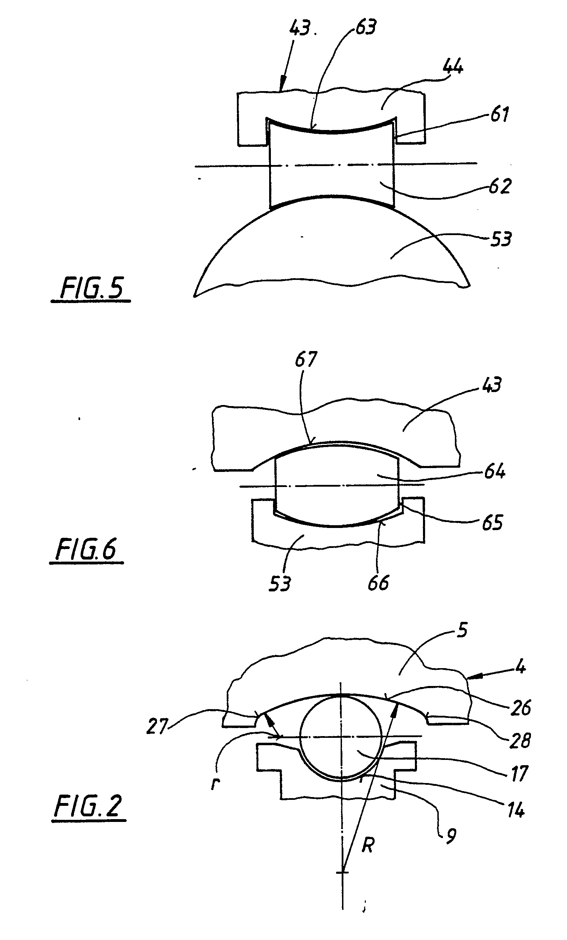

Figur 2 zeigt eine vergrößerte Darstellung einer durch die Basis 5 des Führungsflansches 4 und den Stützsteg 9 gebildeten Kugelführung mit einer in der Laufrille 14 angeordneten Kugel 17. Bei dieser gegenüber der Figur 1 modifizierten Ausbildung der Kugelführung ist eine Führungsfläche 26 vorgesehen, die seitliche Anlaufschultern 27, 28 aufweist. Die Anlaufschultern 27, 28 sind durch gegenüber dem Krümmungsradius R verringerte Auslaufradien r gebildet, die ein Anschmiegen der Kugeln 17 an die Anlaufschultern 27, 28 ermöglicht. Die Anlaufschultern 27, 28 bilden somit eine in beide Drehrichtungen wirkende Begrenzung der möglichen Relativverdrehung zwischen der Oberschiene 1 und der Unterschiene 2. Die mögliche Anschmiegung verhindert dabei, daß sich die Anlaufschultern 27, 28 unter Belastung in die Oberfläche der Kugeln 17 eindrücken.

Figur 3 zeigt ein Ausführungsbeisiel der mit Kugeln 16, 17 und 18 versehenen Längsführung 3 mit einem Stützsteg 29, dessen Laufrillen 30, 31, 32 einen waagerecht verlaufenden Konturbereich 33, 34, 35 aufweisen, so daß außer einer relativen Verdrehung der Oberschiene 1 zur Unterschiene 2 um die Längsachse der Längsführung 3 auch ein relativer Querversatz q der Oberschiene 1 gegenüber der Unterschiene 2 möglich ist. Die waagerechten Konturbereiche 33, 34, 35 bilden dabei exakte Parallelführungen, die den relativen Querversatz q ermöglichen, ohne daß sich eine zwangsläufig zu einer Verspannung führende Änderung der Gesamthöhe H der Längsführung 3 ergibt.

Figur 4 zeigt eine Längsführung 37 mit einer Oberschiene 38 und einer Unterschiene 39, wobei zur Längsverschiebung der Oberschiene 38 gegenüber der Unterschiene 39 sowie zur relativen Verdrehung zwischen der Oberschiene 38 und der Unterschiene 39 Rollen 40, 41, 42 vorgesehen sind. Bei diesem Ausführungsbeispiel ist ein Führungsflansch 43 längs seiner Basis 44 und seinen beiden Schenkeln 45, 46 mit jeweils einer Längsnut 47, 48, 49 zur Aufnahme der Rollen 40, 41, 42 vorgesehen.

Die Rollen 40, 41, 42 wälzen in Längsrichtung bzw. gleiten in Umfangsrichtung auf einem Führungsflächen 50, 51, 52 aufweisenden Stützsteg 53 der Unterschiene 39. Die Führungsflächen 50, 51, 52 sind auf einem gemeinsamen Umkreis 54 angeordnet, der bereichsweise die Kontur des Stützstegs 53 darstellt. In seinem oberen Endbereich weist dieser zwei seitwärts gerichtete Hak-Vorsprünge 55, 56 auf, die die mögliche relative Drehlage zwischen der Oberschiene 38 und der Unterschiene 39 durch Anlage an Hak-Vorsprüngen 57, 58, 59 des Führungsflansches 43 begrenzen. Die Hak-Vorsprünge 57, 58, 59 des Führungsflansches 43 nehmen gleichzeitig die Längsnuten 47, 48, 49 zur Führung der Rollen 40, 41, 42 auf. Hierdurch ergibt sich eine besonders kompakte und übersichtliche Bauweise für die Längsführung 37.

Die Figur 5 zeigt in einem vergrößerten Teilausschnitt eine gegenüber Figur 4 modifizierte Ausführung der Wälzkörperführung. Hierbei ist die Basis 44 mit einer Längsnut 61 vorgesehen, die zur Führung von globoidförmigen Wälzkörpern 62 einen konvex ausgebildeten Nutgrund 63 aufweist. Der Stützsteg 53 kann gegenüber dem Ausführungsbeispiel in Figur 4 unverändert beibehalten werden, da die globoidförmigen Wälzkörper 62 sich an die Führungsfläche 51 anschmiegen.

Die Verwendung von globoidförmigen Wälzkörpern 62 bietet gegenüber der Verwendung von Rollen 40, 41, 42 den Vorteil der größeren Tragfähigkeit aufgrund der beidseitgen Linienberührung zwischen Wälzkörpern 62 und dem Führungsflansch 43 einerseits und dem Stützsteg 53 andererseits.

Figur 6 zeigt ein weiteres gegenüber der Figur 4 modifiziertes Ausführungsbeispiel. Hierbei werden zwischen dem Führungsflansch 43 und dem Stützsteg 53 tonnenförmige Wälzkörper 64 eingesetzt. Zur Führung der tonnenförmigen Wälzkörper 64 weist der Stützsteg 53 Längsnuten 65 mit einem konkaven Nutgrund 66 auf. Im Führungsflansch 43 stützen sich die Wälzkörper 64 an den Längsnuten 65 gegenüberliegend angeordneten konkaven Führungsflächen 67 des Führungsflansches 43 ab.

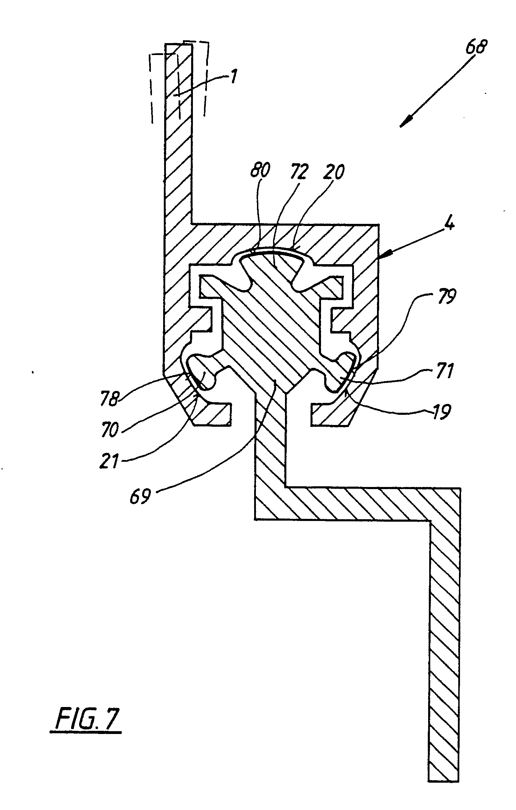

Figur 7 zeigt ein Ausführungsbeispiel einer Längsführung 68, die als Besonderheit einen Stützsteg 69 aufweist, dessen drei gleichmäßig über den Umfang angeordnete Gleitstege 70, 71, 72 an den Führungsflächen 19, 20, 21 des Führungsflansches 4 der Oberschiene 1 sowohl in Längsrichtung als auch in Umfangsrichtung gleiten. Zur Verbesserung der Gleiteigenschaften sind auf den Berührungsflächen der Gleitstege 70, 71, 72 Beschichtungen 78, 79, 80 aufgebracht. Diese bestehen vorzugsweise aus einem gleitfähigen Kunststoff.

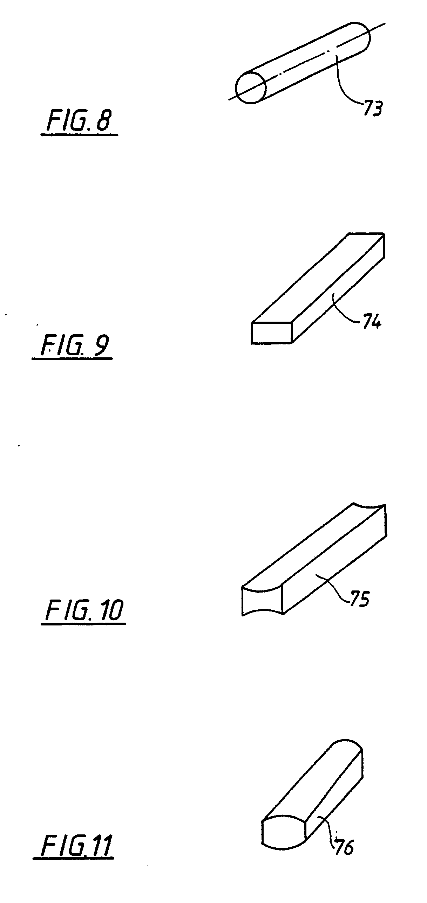

In den Figuren 8 bis 11 sind unterschiedliche Gleitelemente 73, 74, 75, 76 dargestellt, die entsprechend den aus den bereits erläuterten Ausführungsbeispielen bekannten Kugeln 16, 17, 18, Rollen 40, 41, 42, globoidförmigen Wälzkörpern 62 und tonnenförmigen Wälzkörpern 64 einen runden, rechteckförmigen, doppelkonkaven oder doppelkonvexen Querschnitt aufweisen.

Die Gleitelemente 73, 74, 75, 76 lassen sich anstatt der Kugeln 16, 17, 18, Rollen 40, 41, 42 und der Wälzkörper 62, 64 zwischen die entsprechend ausgebildeten Ober- und Unterschienen einsetzen und bieten aufgrund ihrer geringen Herstellungskosten und ihres vergleichsweise geringen Eigengewichts gegenüber den metallischen Kugeln, Rollen oder Wälzkörpern die Möglichkeit Längsführungen kostengünstig und mit reduziertem Gewicht herzustellen. Natürlich ist es auch denkbar, ein Gleitelement in Form eines beschichteten Bandes in die Längsführung einzulegen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

**Ansprüche**

1. Längsführung, insbesondere für eine Längsverstelleinrichtung eines Fahrzeugsitzes, mit einer Unterschiene und einer Oberschiene, die einen U-förmigen Führungsflansch aufweist, der einen Stützsteg der Unterschiene umgreift, wobei zwischen dem Führungsflansch und dem Stützsteg nach Art einer Dreipunktabstützung Gleitmittel angeordnet sind, **dadurch gekennzeichnet, daß** zumindest der Führungsflansch (4, 43) oder der Stützsteg (9, 29, 53, 69) mit den Gleitmitteln (16..18, 40..42, 62, 64, 70..72, 73..76) in Kontakt stehende, als axiale und radiale Führungsbahnen ausgebildete Führungsflächen (19... 21, 26, 50...52, 67) aufweisen.

2. Längsführung nach Anspruch 1, **dadurch gekennzeichnet,** daß der U-förmige Führungsflansch (4, 43) aus drei Stegen, nämlich einer Basis (5, 44, 60) und rechtwinkelig daran ansetzenden Schenkeln (6, 7; 45, 46) gebildet ist, und die Basis (5, 44, 60) sowie beide Schenkel (6, 7; 45, 46) jeweils eine der auf einem gemeinsamen Umkreis (54, 77) äquidistant angeordneten, symmetrisch zur Mittelsenkrechten des Führungsflansches (4, 43) verteilten Führungsflächen (19 bis 21, 26, 50 bis 52, 67) aufweisen.

3. Längsführung nach Anspruch 1 oder 2, **dadurch gekennzeichnet,** daß die Gleitmittel als Kugeln (16 bis 18) ausgebildet sind, die in Laufrillen (13 bis 15, 30 bis 32) des als Wälzlagerführung (12) ausgebildeten Stützsteges (9, 29) geführt sind und mit den Führungsflächen (19, 20, 21) des Führungsflansches (4) in Kontakt stehen, und die Krümmungsradien der Führungsflächen (19 bis 21) sich in einem gemeinsamen Punkt der Längsachse der Längsführung (3, 36) schneiden.

4. Längsführung nach Anspruch 3, **dadurch gekennzeichnet,** daß die Führungsflächen (19 bis 21) durch verringerte Krümmungsradien gebildete seitliche Anlaufschultern (27, 28) aufweisen.

5. Längsführung nach einem der vorangehenden Ansprüche, **dadurch gekennzeichnet,** daß die der Führungsfläche (20) der Basis (5) zugeordnete Kugel (17) einen gegenüber den den Schenkeln (6, 7) zugeordneten Kugeln (16, 18) vergrößerten Durchmesser aufweist.

6. Längsführung nach Anspruch 3, **dadurch gekennzeichnet,** daß die Laufrillen (30 bis 32) des Stützsteges (29) horizontal verlaufende Konturbereiche (33 bis 35) aufweisen.

7. Längsführung nach Anspruch 1, **dadurch gekennzeichnet,** daß die Gleitmittel als Rollen (40, 41, 42) ausgebildet sind, die in Längsnuten (47, 48, 49) des als Wälzlagerführung (12) ausgebildeten Führungsflansches (43) geführt sind und mit den Führungsflächen (50, 51, 52) des Stützsteges (53) in Kontakt stehen, und die Krümmungsradien der Führungsflächen (50, 51, 52) sich in einem gemeinsamen Punkt der Längsachse der Längsführung (37) schneiden.

8. Längsführung nach Anspruch 7, **dadurch gekennzeichnet,** daß die Rollen (40..42) als globoidförmige Wälzkörper (62) ausgebildet sind, die im Führungsflansch (43) in Längsnuten (61) mit konvexem Nutgrund (63) geführt sind.

9. Längsführung nach Anspruch 7, **dadurch gekennzeichnet,** daß die Rollen (40..42) als tonnenförmige Wälzkörper (64) ausgebildet sind, die im Stützsteg (53) in Längsnuten (65) mit konkavem Nutgrund (66) geführt sind.

10. Längsführung nach einem der vorangehenden Ansprüche, **dadurch gekennzeichnet,** daß die Gleitmittel als Beschichtung (78, 79, 80) ausgebildet sind, die auf mit dem Stützsteg (69) verbundenen Gleitstegen (70, 71, 72) und/oder auf den Führungsflächen (19, 20, 21) des Führungsflansches (4) der Längsführung (68) aufgebracht sind.

11. Längsführung nach einem der vorangehenden Ansprüche, **dadurch gekennzeichnet,** daß mit dem Stützsteg (9, 29, 53, 69) oder dem Führungsflansch (4, 43) verbundene Gleitelemente (73 bis 76) als Gleitmittel vorgesehen sind.

12. Längsführung nach Anspruch 11, **dadurch gekennzeichnet,** daß die Gleitelemente (73 bis 76) einen runden, rechteck-, globoid- oder tonnenförmigen Querschnitt aufweisen und sich im wesentlichen über die gesamte Länge der Längsführung (3, 36, 37) erstrecken.

13. Längsführung nach einem der vorangehenden Ansprüche, **dadurch gekennzeichnet,** daß die Oberschiene (1, 38) und die Unterschiene (2, 39) einander versetzt überragende Verhakungsorgane (22 bis 25, 55 bis 59) aufweisen.

14. Längsführung nach Anspruch 13, **dadurch gekennzeichnet,** daß die Oberschiene (1, 38) zumindest an beiden Schenkeln (6, 7; 45, 46) des Führungsflansches (4, 43) seitlich in den Innenraum des Profils weisende Hak-Vorsprünge (22, 23; 57, 58) aufweist, die von Hak-Vorsprüngen (24, 25; 55, 56) der Unterschiene (2, 39) überragt werden, die seitlich zu beiden Seiten des Stützsteges (9, 29, 53, 69) abstehen.

FIG.1

FIG.4

*FIG. 3*

*FIG.5*

*FIG.6*

*FIG.2*

FIG. 7

FIG. 8

73

FIG. 9

74

FIG. 10

75

FIG. 11

76